# EUROPÄISCHE PATENTSCHRIFT

(11) **EP 0 685 913 B1**
(45) Veröffentlichungstag und Bekanntmachung des Hinweises auf die Patenterteilung: **22.07.1998**
(21) Anmeldenummer: 95250121.1
(22) Anmeldetag: 19.05.1995
(51) Int. Cl.: H02B 11/127

(54) **Schaltgerät mit einer von der Schaltstellung abhängigen Einrichtung zum Ein- und Ausfahren relativ zu einem Einschubrahmen**
Switchgear with a switch position dependent mechanism for introduction and extraction relative to a slide-in frame
Appareillage de commutation avec mécanisme d'introduction et d'extraction par rapport à un bloc-tiroir, dépendant de la position du commutateur

(30) Priorität: 03.06.1994 DE 4420580
(43) Veröffentlichungstag der Anmeldung: 06.12.1995
(73) Patentinhaber: SIEMENS AKTIENGESELLSCHAFT, 80333 München (DE)
(72) Erfinder: Liebetruth, Marc, D-13465 Berlin (DE); Ahlert, Torsten, D-15517 Fürstenwalde (DE)

(56) Entgegenhaltungen:
- EP-A- 0 227 586
- EP-A- 0 411 728
- US-A- 4 002 865
- US-A- 4 063 305
- US-A- 5 097 382
- US-A- 5 200 585

## Beschreibung

Die Erfindung betrifft ein Schaltgerät mit einer eine Schaltkontaktanordnung betätigenden Schaltwelle und Bedienungselementen zum Ein- und Ausschalten sowie mit einer Einrichtung zum Einfahren und Ausfahren relativ zu einem Einschubrahmen und mit einem von Hand bedienbaren Verschlußorgan, das den Zugang eines Werkzeuges zu der Einrichtung in Abhängigkeit von einer Verriegelungsbedingung sperrt, wobei das Verschlußorgan in Abhängigkeit von dem Bedienungselement für das Ausschalten nur dann zur Freigabe der Einrichtung zum Ein- und Ausfahren betätigbar ist, wenn das Bedienungselement für AUS betätigt ist.

Ein Schaltgerät dieser Art ist durch die US-A-5 097 382 bekannt geworden. Hierbei ist das Bedienungselement für das Ausschalten Bestandteil einer die Einrichtung zum Ein- und Ausfahren bildenden Baugruppe. Dadurch befinden sich das Bedienungselement und das Verschlußorgan in enger räumlicher Nähe und sind relativ einfach gegeneinander verriegelbar. Diesem Vorteil steht der Wunsch gegenüber, die zum EIN- und AUS-Schalten eines Schaltgerätes dienenden Bedienungs- und Anzeigelemente an einer zentralen Stelle eines frontseitigen Bedienungspultes anzuordnen und diese Elemente damit dem Benutzer in übersichtlicher Anordnung darzubieten. An dieser Stelle läßt sich jedoch die Einrichtung zum Ein- und Ausfahren nicht anordnen, weil der dahinter liegende Bereich des Schaltgerätes die Unterbringung der Einrichtung nicht zuläßt. Mit Rücksicht darauf, daß Schaltgeräte sowohl in einer Bauform für festen Einbau als auch in der Bauform mit Einschubrahmen benötigt werden, besteht vielmehr die Forderung, daß die Einrichtung zum Ein- und Ausfahren als Baugruppe nachrüstbar ist. Hierfür kommt in der Regel nur eine der Seitenflächen oder die Unterseite des Schaltgerätes in Betracht. Aus diesen gegensätzlichen Anforderungen ergibt sich unvermeidlich ein räumlicher Abstand zwischen dem Bedienungselement zum Ausschalten und dem Bedienungselement zum Ein- und Ausfahren mit dem zugehörigen Verschlußorgan.

Der Erfindung liegt ausgehend hiervon die Aufgabe zugrunde, die Sicherheitsseinrichtung, die den Zusammenhang zwischen dem Bedienungselement zum Ausschalten und der Einrichtung zum Ein- und Ausfahren herstellt, trotz der erläuterten räumlichen Entfernung mittels einfacher und zwangsläufig wirkender sowie im Bedarfsfall nachträglich leicht montierbarer Teile zu verwirklichen.

Diese Aufgabe wird gemäß der Erfindung dadurch gelöst, daß das Verschlußorgan mit einer wenigstens zwei Arbeitsflächen aufweisenden Sperrstange zusammenwirkt, von denen eine erste Arbeitsfläche bei nicht betätigtem Bedienungselement zum AUS-Schalten durch einen von dem Bedienungselement abhängigen AUS-Betätiger und eine zweite Arbeitsfläche bei in der Einschaltstellung befindlicher Schaltwelle durch einen von der Schaltwelle abhängigen EIN-Sperrhebel überdeckt wird und dadurch die Sperrstange gegen eine das Verschlußorgan zum Öffnen freigebende Verschiebung blockiert wird, wenn die Schaltkontaktanordnung geschlossen ist.

Die Sperrstange überbrückt dabei mindestens zu einem Teil den Abstand zwischen dem Verschlußorgan und dem AUS-Betätiger und ist in die Sicherheitsfunktion einbezogen. Wesentlich ist hierbei die Erfassung der Stellung der Schaltwelle, weil auf diese Weise nicht nur die Abgabe eines Befehls "Schalter AUS", sondern auch die tatsächlich erfolgte Ausschaltung berücksichtigt wird.

Der EIN-Sperrhebel kann Bestandteil einer Anzeigevorrichtung für die Schaltstellung sein. Diese Anordnung ermöglicht ein vorteilhaft einfaches Zusammenwirken der Teile, weil die Anzeigevorrichtung frontseitig an dem Schaltgerät angebracht ist und dort gleichfalls die Sperrstange vorteilhaft anzubringen ist.

Die Sperrstange kann rechtwinklig zu der Bewegungsrichtung des Verschlußorgans geführt sein, und die Sperrstange und das Verschlußorgan können durch ein Umlenkgestänge verbunden sein. Auf diese Weise gelingt es, nahezu beliebige räumliche Zuordnungen zwischen dem Verschlußorgan und den mit der Sperrstange zusammenwirkenden Elementen zu verwirklichen.

Es empfiehlt sich, das Umlenkgestänge so auszubilden, daß es eine Verschiebung des Verschlußorgans sprunghaft auf die Sperrstange überträgt. Insbesondere kann das Umlenkgestänge eine mit dem als geradlinig verschiebbar geführter Schieber ausgebildeten Verschlußorgan gekuppelte Schubstange und einen Winkelhebel umfassen, dessen einer Schenkel einer Arbeitsfläche der Sperrstange gegenübersteht und dessen anderer Schenkel einen Mitnehmerzapfen zum Eingreifen in eine Ausnehmung der Schubstange derart aufweist, daß der Winkelhebel bei nur teilweiser Bewegung des Verschlußorgans im Öffnungssinn seine vollständige Schwenkung ausführt und nach dem Austreten des Mitnehmerzapfens aus der Ausnehmung und weiterer Verschiebung der Schubstange die Stellung des Winkelhebels unverändert bleibt.

Hierdurch wird eine Stelle geschaffen, an welcher die Sicherheitseinrichtung vorteilhaft trennbar ist, so daß beispielsweise die Sperrstange an dem inneren Tragwerk des Schaltgerätes geführt sein kann, während das Umlenkgestänge und daß Verschlußorgan an dem abnehmbaren Bedienungspult des Schaltgerätes angebracht sind. Beim Anbau des Bedienungspultes gelangen somit das Umlenkgestänge und die Sperrstange selbsttätig in Eingriff, wobei das beschriebene sprungartige Verhalten in gewissem Umfang einen Ausgleich von Toleranzen ermöglicht.

Im übrigen kann die Sperrstange eine weitere vorteilhafte Funktion dadurch übernehmen, daß sie eine weitere Arbeitsfläche als Angriffsstelle für einen Schloßriegel besitzt, durch den die Sperrstange betätigbar ist. Auf diese Weise ist das Schaltgerät im ausgeschalteten Zustand abschließbar.

Die Erfindung wird im folgenden anhand des in den Figuren dargestellten Ausführungsbeispieles näher erläutert.

Die Figur 1 zeigt schematisch in perspektivischer Ansicht einen Niederspannungs-Leistungsschalter mit einem Einschubrahmen und Teilen eines Schaltschrankes oder einer Schaltanlage.

In der Figur 2 sind gleichfalls schematisch und perspektivisch Teile einer Einrichtung zum Ein- und Ausfahren des in der Figur 1 gezeigten Niederspannungs-Leistungsschalters sowie eine Sperrstange und ein Umlenkgestänge dargestellt.

In der Figur 3 ist ein Teil eines Bedienungspultes des in der Figur 1 gezeigten Niederspannungs-Leistungsschalters zusammen mit einem Verschlußorgan und dem Umlenkgestänge gemäß der Figur 2 gezeigt.

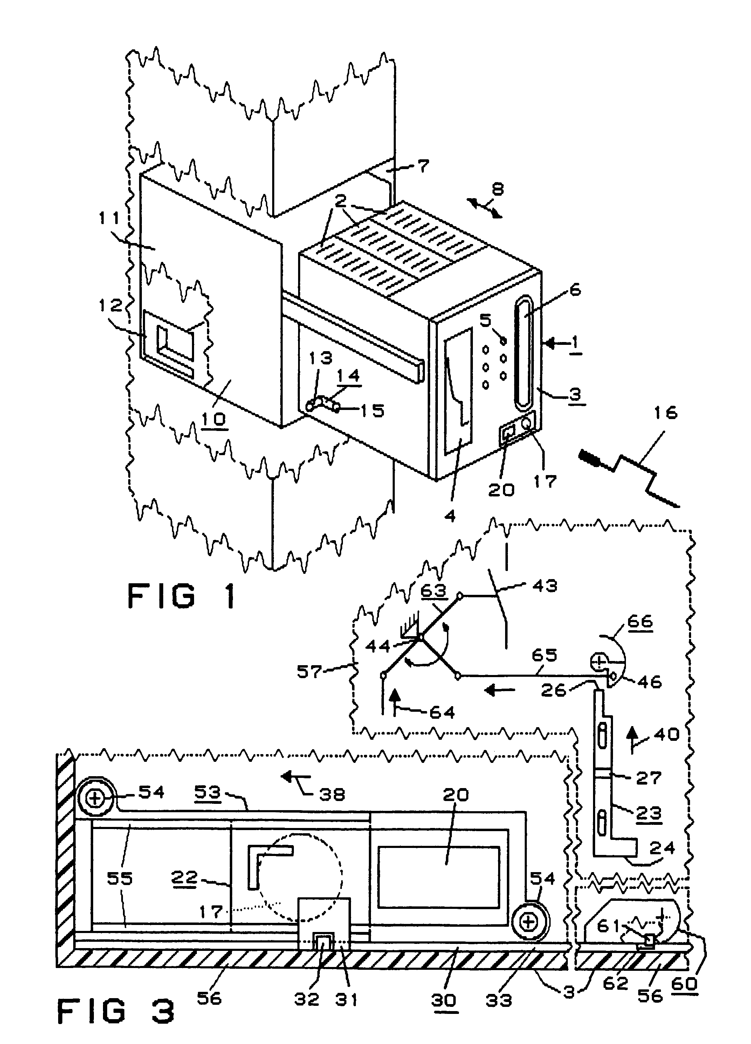

Das in der Figur 1 gezeigte Schaltgerät 1 ist ein Niederspannungs-Leistungsschalter mit Lichtbogenlöschkammern 2, deren Austrittsöffnungen obenliegend angeordnet sind. Ein frontseitges Bedienungspult 3 weist an der linken Seite das Bedienfeld eines elektronischen Überstromauslösers 4, in der Mitte Bedienungs- und Anzeigeelemente und an der rechten Seite einen Handhebel 6 zum Spannen eines Federspeichers auf. Zu den Bedienungs- und Anzeigeelementen gehört ein Bedienungselement 5 zum AUS-Schalten des Schaltgerätes 1. In einer Schaltzelle 7 eines abgebrochen gezeigten Schaltschrankes oder einer mehrfeldrigen Schaltanlage befindet sind ein Einschubrahmen 10, dessen linke Seitenwand 11 zur Sichtbarmachung eines Kulissenstückes 12 aufgebrochen dargestellt ist. Mit dem Kulissenstück 12 wirkt ein Kurbelzapfen 13 zusammen, der mittels eines Kurbelarmes 14 an einer Einfahrwelle 15 angebracht ist. Das Schaltgerät 1 ist mit einer Einrichtung zum Ein- und Ausfahren bezüglich des Einschubrahmens 10 versehen, zu der die Einfahrwelle 15 gehört. Die Einrichtung zum Ein- und Ausfahren ist mittels eines Werkzeuges 16 zu bedienen, das in eine an dem Bedienungspult 3 etwa unterhalb des Handhebels 6 vorgesehene Öffnung 17 einführbar ist. Ein neben der Öffnung 17 befindliches Fenster 20 dient zur Betrachtung einer Anzeigevorrichtung, die die jeweilige Stellung des Schaltgerätes 1 in dem Einschubrahmen 10 anzeigt. In der Figur 1 ist das Schaltgerät in seiner vollständig herausgezogenen Stellung gezeigt, in der es von seitlichen Tragschienen abgenommen werden kann. Beim Einschieben werden nacheinander die Trennstellung und ausgehend von dieser durch Betätigung mittels des Werkzeuges 16 die Prüf- und Betriebsstellung erreicht.

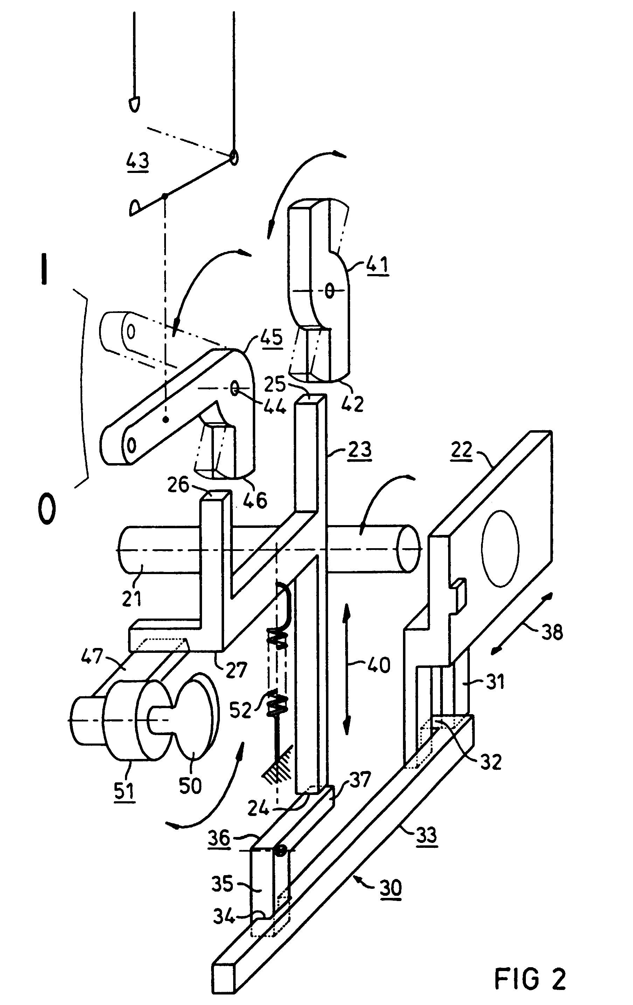

Die erwähnte Einrichtung zum Ein- und Ausfahren umfaßt eine in der Figur 2 schematisch gezeigte Gewindespindel 21, mit der das Werkzeug 16 kuppelbar ist. Ein nicht näher dargestelltes Getriebe wandelt die Drehung der Gewindespindel 21 in eine Drehung der Einfahrwelle 15 um. Da mit der Verschiebung des Schaltgerätes 1 in dem Einschubrahmen 10 (Figur 1) die Betätigung von Trennkontakten verbunden ist, darf die Einrichtung zum Ein- und Ausfahren nur im ausgeschalteten Zustand des Schaltgerätes 1 erfolgen. Um dies sicherzustellen, ist der Gewindespindel 21 ein in der Figur 2 gezeigtes Verschlußorgan 22 zugeordnet, durch das die in der Figur 1 gezeigte Öffnung 17 im Bedienungspult 3 verschließbar ist. Das Verschlußorgan 22 wirkt mit einer Sperrstange 23 zusammen, die insgesamt vier Arbeitsflächen 24, 25, 26 und 27 aufweist, von denen die Arbeitsfläche 25 im Sinne der eingangs erläuterten Funktion die erste und die Arbeitsfläche 26 die zweite darstellt. Eine weitere Arbeitsfläche 24 befindet sich am unteren Ende der Sperrstange 23 und ist durch ein Umlenkgestänge 30 beaufschlagbar, das mit dem Verschlußorgan 22 in Verbindung steht. Das als Schieber ausgebildete Verschlußorgan 22 besitzt hierzu eine Mitnehmergabel 31, die einen Endzapfen 32 einer Schubstange 33 übergreift. In eine Ausnehmung 34 der Schubstange 33 greift der eine Hebelarm 35 eines Winkelhebels 36 ein, dessen anderer Hebelarm 37 der Arbeitsfläche 24 der Sperrstange 23 gegenübersteht. Somit bewirkt eine Verschiebung des Verschlußorgans 22 in der Figur 2 in der Richtung eines Pfeiles 38 eine Anhebung der Sperrstange 23 in der Richtung eines Pfeiles 40.

Die bereits erwähnte erste Arbeitsfläche 25 und die zweite Arbeitsfläche 26 sind an dem der Arbeitsfläche 24 gegenüberliegenden Ende der Sperrstange 23 angeordnet. Dabei steht der ersten Arbeitsfläche 25 ein AUS-Betätiger 41 gegenüber, der in der Figur 2 in seiner aktiven Stellung ausgezogen und in seiner nichtaktiven Stellung strichpunktiert dargestellt ist. Wie man erkennt, ist die erste Arbeitsfläche 25 der Sperrstange 23 durch eine untere Sperrfläche 42 des AUS-Betätigers 41 überdeckbar. Somit kann die Sperrstange 23 nicht angehoben werden, wenn die Sperrfläche 42 direkt über der ersten Arbeitsfläche 25 steht. Über das Umlenkgestänge 30 ist hierdurch auch das Verschlußorgan 22 gegen Verschiebung gesperrt. Es besteht somit kein Zugang zu der Gewindespindel 21.

Der AUS-Betätiger 41 ist dasjenige Element, welches die Überführung einer in der Figur 2 schematisch angedeuteten Schaltkontaktanordnung 43 aus der strichpunktierten Einschaltstellung in die ausgezogen gezeigte Ausschaltstellung vermittelt. Beispielsweise kann der AUS-Betätiger 41 unmittelbar mit dem als Drucktaste ausgebildeten Bedienungselement 5 zum Ausschalten (Figur 1) verbunden sein oder er kann auf der Verklinkungswelle sitzen, die den Schaltmechanismus in der eingeschalteten Stellung hält. Bei ordnungsgemäßer Funktion des Schaltgerätes 1 kann daher von einer sicheren Zuordnung zwischen der Stellung des AUS-Betätigers 41 und der Schaltkontaktanordnung 43 ausgegangen werden. Im Falle einer schwerwiegenden Störung kann jedoch die Schaltkontaktanordnung 43 geschlossen sein, obwohl der AUS-Betätiger 41 die Stellung gemäß der Figur 2 einnimmt und die Sperrstange 23 somit angehoben werden könnte. Ursache einer solchen Störung kann insbesondere das Verschweißen der Schaltkontakte sein. Um auch in diesem Fall das Öffnen des Verschlußorgans 22 zu verhindern, ist der zweiten Arbeitsfläche 26 der Sperrstange 23 ein von der Stellung einer mit der Schaltkontaktanordnung 43 verbundenen Schaltwelle 44 verbundener EIN-Sperrhebel 45 zugeordnet. Wie der Figur 2 zu entnehmen ist, ist die zweite Arbeitsfläche 26 durch eine Sperrfläche 46 des EIN-Sperrhebels 45 überdeckbar, wenn der EIN-Sperrhebel 45 die strichpunktierte Stellung einnimmt.

Mit der verbleibenden Arbeitsfläche 27 der Sperrstange 23 wirkt ein Schloßriegel 47 zusammen, der zu einem durch einen Schlüssel 50 betätigbaren Sicherheitsschloß 51 gehört. Da die Sperrstange 23, wie vorstehend erläutert, nur dann angehoben werden kann, wenn die Arbeitsflächen 25 und 26 nicht von den Sperrflächen 42 und 46 überdeckt werden, ist das Sicherheitsschloß 51 nur im ausgeschalteten Zustand des Schaltgerätes 1 betätigbar und der Schlüssel 50 abziehbar. Eine Rückstellfeder 52 spannt die Sperrstange 23 in die in der Figur 2 gezeigte Ruhestellung vor. Durch das Verschieben des Verschlußorgans 22 wird die Sperrstange 23 entgegen der Kraft der Rückstellfeder 52 verschoben.

Einzelheiten der Anordnung des Verschlußorgans 22 und des Umlenkgestänges 30 werden nun anhand der Figur 3 erläutert.

In der Figur 3 ist ein Ausschnitt des Bedienungspultes 3 des Schaltgerätes 1 (Figur 1) gezeigt, und zwar in dem Bereich, der die Öffnung 17 und das Sichtfenster 20 enthält. An der Innenseite des Bedienungspultes 3 ist nahe der einen Ecke ein rahmenartiger Träger 53 mittels zweier Halteösen 54 befestigt. An Führungsleisten 55 des Trägers 53 ist das Verschlußorgan 22 verschiebbar derart geführt, daß die in der Figur 3 verdeckte Öffnung 17 freigegeben werden kann. Die Schubstange 33 des Umlenkgestänges 30 ist zwischen dem Träger 53 und einem unteren Wandteil 56 des Bedienungspultes 3 verschiebbar geführt. Die Sperrstange 23 ist demgegenüber an einem abgebrochen dargestellten Tragwerk 57 des Schaltgerätes 1 (Figur 1) geführt. Es kann sich dabei um Teile handeln, an denen der Schaltmechanismus mit der Schaltwelle 44 angebracht bzw. gelagert ist. Die Sperrstange 23 ist gegenüber der Figur 2 insofern vereinfacht dargestellt, als nur die untere Arbeitsfläche 24 und die obenliegende zweite Arbeitsfläche 26 gezeigt sind. Mit der unteren Arbeitsfläche 24 wirkt ein gegenüber dem Winkelhebel 36 in der Figur 2 abgewandelt ausgebildeter Winkelhebel 60 zusammen, der einen Mitnehmerzapfen 61 aufweist, mit dem er in der dargestellten Ruhestellung in eine Ausnehmung 62 der Schubstange 33 eintaucht. Bei einer Verschiebung der Schubstange 33 durch Betätigen des Verschlußorgans 22 in der Richtung des Pfeiles 38 wird der Winkelhebel 60 zunächst rasch geschwenkt, verbleibt dann jedoch in seiner Endstellung, wenn der Mitnehmerzapfen 61 aus der Ausnehmung 62 ausgetreten ist und dann auf der Oberfläche der Schubstange 33 gleitet. Durch dieses sprungartige Verhalten mit Totgangkupplung wird erreicht, daß die Sperrstange 23 gleich zu Beginn einer Verschiebung des Verschlußorgans 22 betätigt wird und dementsprechend eine Freigabe der Öffnung 17 verhindert wird, wenn das Schaltgerät 1 nicht ausgeschaltet ist. Erforderlich ist hierzu das Drücken des Bedienungselementes 5 (Figur 1) um den AUS-Betätiger 41 in die in der Figur 2 gestrichelt gezeigte Stellung zu drehen.

In der Figur 3 ist ein Beispiel für die Abhängigkeit der Sperrstange 23 von der Stellung der Schaltwelle 44 und die Gestaltung des EIN-Sperrhebels 45 gezeigt. Ein auf der Schaltwelle 44 sitzender Winkelhebel 63 ist durch eine geeignete Antriebsvorrichtung in der Richtung eines Pfeiles 64 zum Einschalten der Schaltkontaktanordnung 43 schwenkbar. Mittels einer Kuppelstange 65 wird dann eine trommelartige Anzeigevorrichtung 66 betätigt, wobei der Umfang der Anzeigevorrichtung 66 die Sperrfläche 46 (Figur 2) bildet.

Die anhand der Figur 3 erläuterte Sicherheitseinrichtung hat die Eigenschaft, daß das Verschlußorgan 22 die in der Richtung des Pfeiles 38 verschobene Stellung beibehält, weil von der Sperrstange 23 ausgehende Kräfte an der Schubstange 33 unwirksam abgefangen werden. Dies gibt dem Bedienenden die Möglichkeit, das Werkzeug 16 in die Öffnung 17 einzuführen, ohne zugleich das Verschlußorgan 22 festhalten zu müssen. Nach dem Verfahren des Schaltgerätes 1 verschließt der Bedienende die Öffnung 17 wieder durch eine bewußte Handlung, nämlich durch das Zurückschieben des Verschlußorgans 22 und stellt hierdurch die Möglichkeit zum EIN-Schalten wieder her.

## Patentansprüche

1. Schaltgerät (1) mit einer eine Schaltkontaktanordnung (43) betätigenden Schaltwelle (44) sowie mit einem Bedienungselement zum EIN-Schalten und einem Bedienungselement (5) zum AUS-Schalten sowie mit einer Einrichtung zum Einfahren und Ausfahren relativ zu einem Einschubrahmen (10) und mit einem von Hand bedienbaren Verschlußorgan (22), das den Zugang eines Werkzeuges (16) zu der zum Ein- und Ausfahren dienenden Einrichtung in Abhängigkeit von einer Verriegelungsbedingung sperrt, wobei das Verschlußorgan (22) in Abhängigkeit von dem Bedienungselement (5) für das AUS-Schalten nur dann zur Freigabe der Einrichtung zum Ein- und Ausfahren betätigt werden kann, wenn das Bedienungselement (5) für AUS betätigt ist,
**dadurch gekennzeichnet,** daß das Verschlußorgan (23) mit einer wenigstens zwei Arbeitsflächen (25, 26) aufweisenden Sperrstange (23) zusammenwirkt, von denen eine erste Arbeitsfläche (25) bei nicht betätigtem Bedienungselement (5) zum AUS-Schalten durch einen von dem Bedienungselement (5) abhängigen AUS-Betätiger (41) und eine zweite Arbeitsfläche (26) bei in der Einschaltstellung befindlicher Schaltwelle (44) durch einen von der Schaltwelle (44) abhängigen EIN-Sperrhebel (45) überdeckt wird und dadurch die Sperrstange (23) gegen eine das Verschlußorgan (22) zum Öffnen freigebende Verschiebung blockiert wird, wenn die Schaltkontaktanordnung (43) geschlossen ist.

2. Schaltgerät nach Anspruch 1,
**dadurch gekennzeichnet,** daß der EIN-Sperrhebel (45) Bestandteil einer Anzeigevorrichtung (66) für die Schaltstellung ist.

3. Schaltgerät nach Anspruch 1,
**dadurch gekennzeichnet,** daß die Sperrstange (23) rechtwinklig zu der Bewegungsrichtung des Verschlußorgans (22) geführt ist und daß die Sperrstange (23) und das Verschlußorgan (22) durch ein Umlenkgestänge (30) verbunden sind.

4. Schaltgerät nach einem der vorangehenden Ansprüche,
**dadurch gekennzeichnet,** daß das Umlenkgestänge (30) eine Verschiebung des Verschlußorgans (22) sprunghaft auf die Sperrstange (23) überträgt.

5. Schaltgerät nach Anspruch 4,
**dadurch gekennzeichnet,** daß das Umlenkgestänge (30) eine mit dem als geradlinig verschiebbar geführter Schieber ausgebildeten Verschlußorgan (22) gekuppelte Schubstange (33) und einen Winkelhebel (60) umfaßt, dessen einer Schenkel einer Arbeitsfläche (24) der Sperrstange (23) gegenübersteht und dessen anderer Schenkel einen Mitnehmerzapfen (61) zum Eingreifen in eine Ausnehmung (62) der Schubstange (33) derart aufweist, daß der Winkelhebel (60) bei nur teilweiser Bewegung des Verschlußorgans (22) im Öffnungssinn seine vollständige Schwenkung ausführt und nach dem Austreten des Mitnehmerzapfens (61) aus der Ausnehmung (62) und weiterer Verschiebung der Schubstange (33) die Stellung des Winkelhebels (60) unverändert bleibt.

6. Schaltgerät nach einem der vorangehenden Ansprüche,
**dadurch gekennzeichnet,** daß die Sperrstange (23) eine dritte Arbeitsfläche (27) als Angriffstelle für einen Schloßriegel (47) besitzt, durch den die Sperrstange (23) betätigbar ist.

7. Schaltgerät nach einem der vorangehenden Ansprüche,
**dadurch gekennzeichnet,** daß die Sperrstange (23) an einem inneren Tragwerk (57) des Schaltgerätes (1) geführt ist, während das Umlenkgestänge (30) und das Verschlußorgan (22) an der Innenseite eines das Tragwerk (57) abdeckenden Bedienungspultes (3) angeordnet sind.

## Claims

1. Switching device (1) having an actuating shaft (44) which actuates a switching contact arrangement (43), and having an operating element for switching ON and an operating element (5) for switching OFF, and having a mechanism for insertion and withdrawal relative to a guide frame (10), and having a cover member (22) which can be operated by hand and blocks the access of a tool (16) to the mechanism serving for insertion and withdrawal as a function of a locking condition, it being possible to actuate the cover member (22) as a function of the operating element (5) for switching OFF for the purpose of releasing the mechanism for insertion and withdrawal only when the operating element (5) for OFF is actuated, characterized in that the cover member (23) cooperates with an arresting bar (23) having at least two working surfaces (25, 26), of which a first working surface (25) is covered, when the operating element (5) for switching OFF is not actuated, by an OFF actuator (41) dependent on the operating element (5), and a second working surface (26), is covered, when the actuating shaft (44) is located in the switched-on position, by an ON arresting lever (45) dependent on the actuating shaft (44), and thereby the arresting bar (23) is blocked against a displacement releasing the cover member (22) to open when the switching contact arrangement (43) is closed.

2. Switching device according to Claim 1, characterized in that the ON arresting lever (45) is a component of a display device (66) for the switch position.

3. Switching device according to Claim 1, characterized in that the arresting bar (23) is guided at right angles to the direction of movement of the cover member (22), and in that the arresting bar (23) and the cover member (22) are connected by a deflecting linkage (30).

4. Switching device according to one of the preceding claims, characterized in that the deflecting linkage (30) transmits a displacement of the cover member (22) abruptly to the arresting bar (23).

5. Switching device according to Claim 4, characterized in that the deflecting linkage (30) comprises a push rod (33), coupled to the cover member (22), which is constructed as a slide that can be guided in a rectilinearly displaceable fashion, and an angle lever (60), one of whose limbs is opposite a working surface (24) of the arresting bar (23), and whose other limb has a driver pin (61), for engaging in a cutout (62) in the push rod (33), in such a way that the angle lever (60) executes its complete swivelling movement given only a partial movement of the cover member (22) in the opening sense, and the position of the angle lever (60) remains unchanged after the emergence of the driver pin (61) from the cutout (62) and further displacement of the push rod (33).

6. Switching device according to one of the preceding claims, characterized in that the arresting bar (23) has a third working surface (27) as point of action for a lock bolt (47) by means of which the arresting bar (23) can be actuated.

7. Switching device according to one of the preceding claims, characterized in that the arresting bar (23) is guided on an inner support (57) of the switching device (1), while the deflecting linkage (30) and the cover member (22) are arranged on the inside of an operator's console (3) covering the support (57).

## Revendications

1. Appareillage de commutation (1) comprenant un axe de commutation (44) actionnant un ensemble (43) à contacts de commutation, ainsi qu'un élément de commande pour la mise EN FONCTION et un élément de commande (5) pour la mise HORS FONCTION, ainsi qu'un mécanisme d'introduction dans un châssis d'encastrement (10) et d'extraction de celui-ci, et un organe d'obturation (22) qui peut être actionné à la main et bloque, en fonction d'une condition de verrouillage, l'accès d'un outil (16) au mécanisme servant à l'introduction et à l'extraction, l'organe d'obturation (22) pouvant être actionné en fonction de l'élément de commande (5) pour la mise HORS FONCTION, en vue de libérer le mécanisme d'introduction et d'extraction, uniquement lorsque l'élément de commande (5) pour la mise HORS FONCTION est actionné,
caractérisé par le fait que l'organe d'obturation (22) coopère avec une tige de blocage (23) munie d'au moins deux surfaces de travail (25, 26) parmi lesquelles une première surface de travail (25) est recouverte, lorsque l'élément de commande (5) pour la mise HORS FONCTION n'est pas actionné, par un actionneur (41) de mise HORS FONCTION dépendant de l'élément de commande (5), et une deuxième surface de travail (26) est recouverte, lorsque l'axe de commutation (44) se trouve dans la position enclenchée, par un levier (45) de blocage de la mise EN FONCTION, dépendant de l'axe de commutation (44), de sorte que, lorsque l'ensemble (43) à contacts de commutation est fermé, la tige de blocage (23) est empêchée d'accomplir un coulissement libérant l'organe d'obturation (22) en vue de l'ouverture.

2. Appareillage de commutation selon la revendication 1,
caractérisé par le fait que le levier (45) de blocage de la mise EN FONCTION fait partie intégrante d'un dispositif (66) indicateur de la position de commutation.

3. Appareillage de commutation selon la revendication 1,
caractérisé par le fait que la tige de blocage (23) est guidée à angle droit par rapport à la direction de mouvement de l'organe d'obturation (22) ; et par le fait que la tige de blocage (23) et l'organe d'obturation (22) sont reliés par l'intermédiaire d'une tringlerie de renvoi (30).

4. Appareillage de commutation selon l'une des revendications précédentes,
caractérisé par le fait que la tringlerie de renvoi (30) répercute, de façon saccadée, un coulissement de l'organe d'obturation (22) sur la tige de blocage (23).

5. Appareillage de commutation selon la revendication 4,
caractérisé par le fait que la tringlerie de renvol (30) comprend une tige de poussée (33) accouplée à l'organe d'obturation (22) réalisé sous la forme d'un coulisseau guidé à coulissement rectiligne, et un levier coudé (60) dont une branche se trouve en vis-à-vis d'une surface de travail (24) de la tige de blocage (23), et dont l'autre branche présente un téton d'entraînement (61) conçu pour venir en prise dans un évidement (62) de la tige de poussée (33), de telle sorte que le levier coudé (60) accomplisse son pivotement intégral uniquement lors d'un mouvement partiel de l'organe d'obturation (22) dans le sens de l'ouverture, et que la position dudit levier coudé (60) demeure inchangée après que le téton d'entraînement (61) est sorti de l'évidement (62), et lors d'une poursuite du coulissement de la tige de poussée (33).

6. Appareillage de commutation selon l'une des revendications précédentes,
caractérisé par le fait que la tige de blocage (23) possède une troisième surface de travail (27) remplissant la fonction d'une zone d'attaque destinée à un pêne (47) par lequel la tige de blocage (23) peut être actionnée.

7. Appareillage de commutation selon l'une des revendications précédentes,
caractérisé par le fait que la tige de blocage (23) est guidée sur un système intérieur de support (57) de l'appareillage de commutation (1), tandis que la tringlerie de renvoi (30) et l'organe d'obturation (22) sont disposés à la face interne d'un pupitre de manoeuvre (3) recouvrant le système de support (57).
